# EUROPÄISCHE PATENTSCHRIFT

(11) **EP 3 212 472 B1**
(45) Veröffentlichungstag und Bekanntmachung des Hinweises auf die Patenterteilung: **29.12.2021**
(21) Anmeldenummer: 15781306.4
(22) Anmeldetag: 29.09.2015
(51) Int. Cl.: B60R 25/00, B60R 25/24, B60W 30/06

(54) **VERFAHREN UND VORRICHTUNG ZUM BETREIBEN EINES FAHRZEUGS**
METHOD AND DEVICE FOR OPERATING A VEHICLE
PROCÉDÉ ET DISPOSITIF PERMETTANT DE FAIRE FONCTIONNER UN VÉHICULE

(30) Priorität: 27.10.2014 DE 102014221772
(43) Veröffentlichungstag der Anmeldung: 06.09.2017
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2015/072347
(87) Internationale Veröffentlichungsnummer: WO 2016/066357

(56) Entgegenhaltungen:
- EP-A1- 0 745 522
- DE-A1-102011 104 061
- DE-A1-102012 222 562
- US-A- 5 276 728
- US-A- 6 091 340
- US-A1- 2007 100 514

## Beschreibung

Die Erfindung betrifft ein Verfahren und eine Vorrichtung zum Betreiben eines Fahrzeugs. Die Erfindung betrifft ferner ein Fahrzeug sowie ein Computerprogramm.

### Stand der Technik

Die Patentschrift US 5 276 728 A zeigt ein Anti-Diebstahl-Alarmsystem eines Fahrzeugs.

Bei einem vollautomatisierten (autonomen) sogenannten Valet Parking wird ein Fahrzeug von seinem Fahrer auf einer Abgabestelle, z.B. vor einem Parkhaus, geparkt und von da fährt das Fahrzeug selber in eine Parkposition/Parkbucht und wieder zurück zur Abgabestelle.

Bei diesem Vorgang wird in den meisten Fällen für ein Parkplatzverwaltungssystem eine Fahrzeugfernsteuerung benötigt, mit der das Fahrzeug, z.B. über WLAN gestartet/ferngesteuert werden kann. Für den Parkvorgang muss ein Parkhausmanagementsystem oder Parkhausverwaltungssystem solch ein Zugang übertragen werden.

Hier besteht insbesondere ein Bedarf, einen Missbrauch eines solchen Zugangs zu verhindern.

### Offenbarung der Erfindung

Die der Erfindung zugrunde liegende Aufgabe kann darin gesehen werden, ein Verfahren zum Betreiben eines Fahrzeugs bereitzustellen, welches es ermöglicht, dass ein Missbrauch bei einem fahrzeugexternen Zugriff auf eine oder mehrere Fahrzeugkomponenten verhindert wird.

Die der Erfindung zugrunde liegende Aufgabe kann auch darin gesehen werden, eine entsprechende Vorrichtung zum Betreiben eines Fahrzeugs bereitzustellen.

Die der Erfindung zugrunde liegende Aufgabe kann des Weiteren darin gesehen werden, ein entsprechendes Fahrzeug bereitzustellen.

Die der Erfindung zugrunde liegende Aufgabe kann ferner darin gesehen werden, ein entsprechendes Computerprogramm bereitzustellen.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines Fahrzeugs bereitgestellt, wobei bei einem fahrzeugexternen Zugriff auf eine oder mehrere Fahrzeugkomponenten der Zugriff mittels einer fahrzeuginternen Sicherungseinrichtung eingeschränkt oder unterbrochen wird, wenn vom Fahrzeug über ein Kommunikationsnetzwerk eine entsprechende Anforderung empfangen wurde.

Gemäß einem weiteren Aspekt wird eine Vorrichtung zum Betreiben eines Fahrzeugs bereitgestellt, umfassend eine Kommunikationsschnittstelle, die ausgebildet ist, eine Anforderung zum Einschränken oder Unterbrechen eines Zugriffs auf eine oder mehrere Fahrzeugkomponenten über ein Kommunikationsnetzwerk zu empfangen, und eine Sicherungseinrichtung, die ausgebildet ist, bei einem Zugriff auf die eine oder die mehreren Fahrzeugkomponenten ansprechend auf den Empfang der Anforderung den Zugriff auf die eine oder die mehreren Fahrzeugkomponenten entsprechend der Anforderung einzuschränken oder zu unterbrechen.

Nach noch einem Aspekt wird ein Fahrzeug bereitgestellt, das eingerichtet ist, das erfindungsgemäße Verfahren durchzuführen.

Nach noch einem Aspekt wird ein Computerprogramm bereitgestellt, welches Programmcode zur Durchführung des erfindungsgemäßen Verfahrens umfasst, wenn das Computerprogramm auf einem Computer ausgeführt wird.

Die Erfindung umfasst also insbesondere den Gedanken, eine Möglichkeit vorzusehen, dass ein Fahrer einen fahrzeugexternen Zugriff auf eine oder mehrere Fahrzeugkomponenten einschränken oder unterbrechen kann. Dies insbesondere dadurch, dass der Fahrer über das Kommunikationsnetzwerk an sein Fahrzeug eine entsprechende Anforderung für ein Einschränken oder Unterbrechen des Zugriffs sendet. Ansprechend auf den Empfang der Anforderung schränkt dann die Sicherungseinrichtung den Zugriff ein oder unterbricht diesen sogar. Dadurch wird also in vorteilhafter Weise ein effizientes Konzept bereitgestellt, welches einen unautorisierten Zugriff oder einen Missbrauch verhindert. Insbesondere ist es im Fall eines Diebstahls des Fahrzeugs ermöglicht, den Zugriff auf eine oder mehrere Fahrzeugkomponenten einzuschränken oder zu unterbrechen. Ein Diebstahl des Fahrzeugs wird somit in vorteilhafter Weise erschwert oder sogar verhindert.

Bei dem Fahrzeug handelt es sich nach einer Ausführungsform um ein vollautomatisiertes oder autonomes Fahrzeug. Das Fahrzeug ist nach einer weiteren Ausführungsform ausgebildet, autonom auf einem Parkplatz von einer Abgabestelle zu einer Parkposition auf dem Parkplatz zu fahren, insbesondere dort einzuparken, vorzugsweise wieder auszuparken und insbesondere von der Parkposition zurück zu der Abgabeposition oder Abgabestelle zu fahren. Ein solches Fahrzeug kann insbesondere als ein AVP-Fahrzeug bezeichnet werden. Hierbei steht "AVP" für "Automatic Valet Parking", also automatischer Parkvorgang.

Autonom oder vollautomatisiert oder vollautomatisch im Sinne der vorliegenden Erfindung bedeutet insbesondere, dass das Fahrzeug selbstständig, also ohne einen Eingriff eines Fahrers, navigiert, insbesondere auf dem Parkplatz navigiert. Das Fahrzeug fährt also selbstständig auf dem Parkplatz, ohne dass ein Fahrer hierfür das Fahrzeug steuern oder sich in dem Fahrzeug befinden müsste. Das heißt also insbesondere, dass das Fahrzeug nach einer Ausführungsform eine Führungseinrichtung für eine Navigation des Fahrzeugs auf dem Parkplatz umfasst. Die Führungseinrichtung führt das Fahrzeug autonom. Ein Führen umfasst insbesondere eine Quer- und/oder eine Längsführung des Fahrzeugs.

Es ist vorgesehen, dass der fahrzeugexterne Zugriff einen Zugriff auf die eine oder die mehreren Fahrzeugkomponenten über das Kommunikationsnetzwerk umfasst. Das heißt also insbesondere, dass der Zugriff über das Kommunikationsnetzwerk erfolgt.

In einer Ausführungsform ist vorgesehen, dass der fahrzeugexterne Zugriff einen Zugriff mittels eines physikalischen Schlüssels auf eine Schlüsselanlage des Fahrzeugs umfasst. Das heißt also insbesondere, dass beispielsweise mittels des physikalischen Schlüssels versucht wird, das Fahrzeug zu starten oder dass mittels des physikalischen Schlüssels das Fahrzeug gestartet wird. Eine Schlüsselanlage umfasst insbesondere ein Schloss, in welches der physikalische Schlüssel passt. Das Schloss ist beispielsweise ein Zündschloss. Das Schloss ist beispielsweise ein Fahrzeugschloss.

Gemäß einer weiteren Ausführungsform ist vorgesehen, dass die Anforderung einen Übersteuerungsbefehl zum Übersteuern des Zugriffswunschs mittels des physikalischen Schlüssels umfasst. Der Zugriff mittels des physikalischen Schlüssels kann somit in vorteilhafter Weise übersteuert werden. Somit kann beispielsweise in vorteilhafter der physikalische Schlüssel eine Fahrzeugtür nicht mehr öffnen oder ein Antriebssystem des Fahrzeugs starten. Der Zugriffswunsch mittels des physikalischen Schlüssels wird somit ignoriert.

In einer anderen Ausführungsform umfasst das Kommunikationsnetzwerk ein WLAN-Netzwerk und/oder ein Mobilfunknetzwerk. Das heißt also insbesondere, dass die Kommunikation insbesondere über das WLAN-Netzwerk und/oder das Mobilfunknetzwerk durchgeführt werden kann.

Eine Abgabeposition im Sinne der vorliegenden Erfindung, ist eine Position, an welcher ein Fahrer des Fahrzeugs sein Fahrzeug für einen autonomen Parkvorgang abstellen kann und von dieser sein Fahrzeug zu einem späteren Zeitpunkt wieder abholen kann.

Eine Parkposition im Sinne der vorliegenden Erfindung ist eine Position, an welcher das Fahrzeug autonom parken soll.

In einer Ausführungsform ist vorgesehen, dass das Fahrzeug autonom von der Abgabeposition zu der Parkposition navigiert.

In einer weiteren Ausführungsform ist vorgesehen, dass das Fahrzeug autonom in die Parkposition einparkt.

In einer anderen Ausführungsform ist vorgesehen, dass das Fahrzeug autonom aus der Parkposition ausparkt.

Nach einer weiteren Ausführungsform ist vorgesehen, dass das Fahrzeug autonom von der Parkposition zu der Abgabeposition navigiert.

Nach noch einer Ausführungsform ist vorgesehen, dass das Fahrzeug über das Kommunikationsnetzwerk ein Informationssignal an einen Teilnehmer des Kommunikationsnetzwerks sendet, dass der Zugriff auf eine oder mehrere Fahrzeugkomponenten angefordert und/oder bereits durchgeführt wurde und/oder noch durchgeführt wird. Das Senden wird vorzugsweise abhängig von einem oder mehreren Kriterien durchgeführt. Das heißt also insbesondere, dass vorzugsweise das Informationssignal gesendet wird, wenn die entsprechenden Kriterien erfüllt sind.

Ein Kriterium ist beispielsweise ein Starten des Fahrzeugs. Das heißt, dass beispielsweise das Informationssignal an den Teilnehmer gesendet wird, wenn das Fahrzeug gestartet wird. Die Fahrzeugkomponente, auf die hier insbesondere zugegriffen wird, ist das Antriebssystem des Fahrzeugs.

Ein Kriterium ist beispielsweise ein Öffnen einer oder mehrere Fahrzeugtüren. Das heißt also, dass vorzugsweise das Informationssignal gesendet wird, wenn eine oder mehrere Fahrzeugtüren geöffnet werden oder worden sind. Die Fahrzeugkomponenten, auf die hier insbesondere zugegriffen wird, ist die Fahrzeugtürverriegelungsanlage.

Weitere Kriterien sind beispielsweise analog zum Öffnen der Fahrzeugtüren ein Öffnen eines Handschuhfaches (vorzugsweise nach einem Öffnen einer Fahrzeugtür) und/oder ein Öffnen eines Kofferraums und/oder ein Öffnen eines Tankdeckels und/oder ein Öffnen einer Motorhaube.

Ein Kriterium ist beispielsweise ein Bedienen von Fahrzeugkomponenten wie zum Beispiel ein Radio oder ein Navigationssystem, vorzugsweise nach einem Öffnen einer Fahrzeugtür.

Das Informationssignal umfasst insbesondere die Information, um welches Kriterium es sich handelt, also beispielsweise die Information, dass der Tankdeckel und/oder die Motorhaube geöffnet wurde.

Dadurch wird insbesondere der technische Vorteil bewirkt, dass der Teilnehmer des Kommunikationsnetzwerks in Kenntnis darüber gesetzt wird, dass ein Zugriff auf eine oder mehrere Fahrzeugkomponenten angefordert und/oder bereits durchgeführt wurde und/oder noch durchgeführt wird. Der Teilnehmer des Kommunikationsnetzwerks ist beispielsweise ein Mobiltelefon, insbesondere ein Smartphone. Der Besitzer des Smartphones, z.B. ein Fahrer oder Eigentümer des Fahrzeugs, wird somit in vorteilhafter Weise in die Lage versetzt, entsprechende Gegenmaßnahmen zu treffen, wenn dieser Zugriff nicht gewünscht oder autorisiert ist.

In einer anderen Ausführungsform ist vorgesehen, dass die Kommunikation über das Kommunikationsnetzwerk verschlüsselt durchgeführt wird. Dadurch wird insbesondere der technische Vorteil bewirkt, dass Unbefugte den Datenverkehr nicht ohne weiteres mitlesen können.

In einer anderen Ausführungsform ist vorgesehen, dass ansprechend auf einen Empfang eines von einem Teilnehmer des Kommunikationsnetzwerks gesendeten Steuerungssignals die Sicherungseinrichtung entsprechend dem Steuerungssignal die eine oder die mehreren Fahrzeugkomponenten steuert.

Dadurch wird insbesondere der technische Vorteil bewirkt, dass eine Steuerung der einen oder der mehreren Fahrzeugkomponenten über den Teilnehmer des Kommunikationsnetzwerks möglich ist. Das heißt also insbesondere, dass ein Fahrer oder ein Eigentümer des Fahrzeugs mittels seines Mobiltelefons eine oder mehrere Fahrzeugkomponenten des Fahrzeugs steuern kann. Somit kann ein Fahrer oder ein Eigentümer des Fahrzeugs in vorteilhafter Weise den fahrzeugexternen Zugriff seitens eines Dritten übersteuern. Das heißt also insbesondere, dass nicht nur der fahrzeugexterne Zugriff seitens eines Dritten eingeschränkt oder unterbrochen wird, sondern vielmehr auch noch dass der Fahrer des Fahrzeugs in vorteilhafter Weise eigene Aktionen einleiten kann, wie z.B. ein Stoppen oder ein Anhalten des Fahrzeugs.

Nach einer Ausführungsform sind die eine oder die mehreren Fahrzeugkomponenten Elemente ausgewählt aus der folgenden Gruppe von Fahrzeugkomponenten: Lenkungssystem, Bremssystem, Antriebssystem, Beleuchtungssystem (zum Beispiel: Fahrtrichtungsanzeiger ("Blinker"), Warnlichtanlage, Schließsystem, Gurtsystem, Fahrerüberwachungssystem.

Nach einer Ausführungsform wird das Gurtsystem derart gesteuert, dass Gurte angezogen oder gestrafft werden. Dadurch kann in vorteilhafter Weise ein Dieb mittels der gestrafften oder angezogenen Gurte festgehalten oder am Sitz fixiert werden.

Nach einer Ausführungsform wird das Fahrerüberwachungssystem aktiviert. Dadurch ist insbesondere eine Dokumentation des Zugriffs ermöglicht.

Nach einer Ausführungsform umfasst das Fahrerüberwachungssystem eine oder mehrere Videokameras.

Es ist vorgesehen, dass für den Zugriff eine Freigabe für einen Parkplatzverwaltungsserver eingerichtet wird, wobei über das Kommunikationsnetzwerk ein Freigabesignal an den Parkplatzverwaltungsserver gesendet wird, dass der Parkplatzverwaltungsserver entsprechend der Freigabe auf die eine oder die mehreren Fahrzeugkomponenten über das Kommunikationsnetzwerk zugreifen kann.

Dadurch wird insbesondere der technische Vorteil bewirkt, dass ein Parkplatzverwaltungsserver auf die eine oder die mehreren Fahrzeugkomponenten zugreifen kann. Das heißt also insbesondere, dass der Parkplatzverwaltungsserver im Rahmen der Freigabe das Fahrzeug fernsteuern kann. Beispielsweise kann der Parkplatzverwaltungsserver das Fahrzeug anschalten, abschalten und/oder zu einer Parkposition fahren und/oder von der Parkposition zurück zu einer Abgabeposition fahren. Insbesondere kann der Parkplatzverwaltungsserver aufgrund der Möglichkeit der Fernsteuerung das Fahrzeug umparken.

Ein Parkplatzverwaltungsserver im Sinne der vorliegenden Erfindung ist insbesondere Teil eines Parkplatzverwaltungssystems. Ein solches Parkplatzverwaltungssystem oder auch Parkplatzmanagementsystem genannt, koordiniert insbesondere unter anderem eine Vergabe der Parkpositionen. Insbesondere übergibt ein solches Parkplatzmanagementsystem den AVP-Fahrzeugen die notwendigen Informationen zum Durchführen des AVP-Vorgangs, z.B. eine digitale Karte des Parkplatzes.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

In einer anderen Ausführungsform ist vorgesehen, dass der Zugriff und vorzugsweise zumindest einige Aktionen (vorzugsweise alle Aktionen), die ansprechend auf den Zugriff durchgeführt werden, aufgezeichnet werden. Dadurch wird insbesondere der technische Vorteil bewirkt, dass auch zu späteren Zeitpunkten nachvollzogen werden kann, welcher Zugriff und welche Aktionen durchgeführt wurden. Dies ist insbesondere für Beweiszwecke vorteilhaft. Ein Aufzeichnen im Sinne der vorliegenden Erfindung ist also insbesondere ein Dokumentieren des Zugriffs und insbesondere der Aktionen.

Es ist vorgesehen, dass die Sicherungseinrichtung ausgebildet ist, eine Freigabe für einen Parkplatzverwaltungsserver einzurichten, wobei die Kommunikationsschnittstelle ausgebildet ist, ein Freigabesignal an den Parkplatzverwaltungsserver über das Kommunikationsnetzwerk zu senden, dass der Parkplatzverwaltungsserver entsprechend der Freigabe auf die eine oder die mehreren Fahrzeugkomponenten über das Kommunikationsnetzwerk zugreifen kann.

Nach einer weiteren Ausführungsform ist vorgesehen, dass das Fahrzeug die erfindungsgemäße Vorrichtung umfasst.

Funktionalitäten der Vorrichtung und des Fahrzeugs ergeben sich analog aus dem Verfahren und umgekehrt.

Die Erfindung wird im Folgenden anhand von bevorzugten Ausführungsbeispielen näher erläutert. Hierbei zeigen
- Fig. 1: ein Ablaufdiagramm eines Verfahrens zum Betreiben eines Fahrzeugs,
- Fig. 2: eine Vorrichtung zum Betreiben eines Fahrzeugs und
- Fig. 3: ein Fahrzeug.

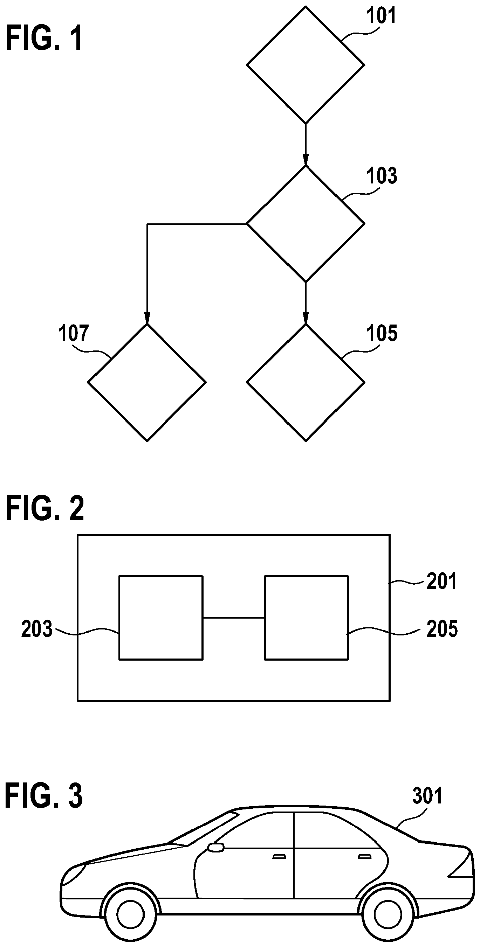

Fig. 1 zeigt ein Ablaufdiagramm eines Verfahrens zum Betreiben eines Fahrzeugs.

In einem Schritt 101 wird ein Zugriff auf eine oder mehrere Fahrzeugkomponenten durchgeführt, wobei es sich hier um einen fahrzeugexternen Zugriff handelt. Das heißt also insbesondere, dass von extern auf die Fahrzeugkomponenten zugegriffen wird. In einem Schritt 103 wird überprüft, ob vom Fahrzeug über ein Kommunikationsnetzwerk eine Anforderung für ein Einschränken oder ein Unterbrechen des Zugriffs empfangen wurde.

Sofern keine Anforderung empfangen wurde, ist gemäß einem Schritt 105 vorgesehen, dass der Zugriff zugelassen wird. Das heißt also, dass der Zugriff nicht eingeschränkt oder unterbrochen wird.

Wenn die Überprüfung im Schritt 103 aber ergeben hat, dass über das Kommunikationsnetzwerk eine entsprechende Anforderung empfangen wurde, so ist gemäß einem Schritt 107 vorgesehen, dass der fahrzeugexterne Zugriff eingeschränkt oder unterbrochen wird.

Das Einschränken oder Unterbrechen des fahrzeugexternen Zugriffs umfasst insbesondere den Fall, dass ein Zugriff auf einige der Fahrzeugkomponenten eingeschränkt und ein weiterer Zugriff auf andere Fahrzeugkomponenten unterbrochen wird.

Fig. 2 zeigt eine Vorrichtung 201 zum Betreiben eines Fahrzeugs.

Die Vorrichtung 201 umfasst eine Kommunikationsschnittstelle 203, die ausgebildet ist, eine Anforderung zum Einschränken oder Unterbrechen eines Zugriffs auf eine oder mehrere Fahrzeugkomponenten über ein Kommunikationsnetzwerk zu empfangen. Die Vorrichtung 201 umfasst eine Sicherungseinrichtung 205, die ausgebildet ist, bei einem Zugriff auf die eine oder die mehreren Fahrzeugkomponenten ansprechend auf den Empfang der Anforderung den Zugriff auf die eine oder die mehreren Fahrzeugkomponenten entsprechend der Anforderung einzuschränken oder zu unterbrechen.

Fig. 3 zeigt ein Fahrzeug 301, das eingerichtet ist, das erfindungsgemäße Verfahren durchzuführen. Das Fahrzeug 301 umfasst beispielsweise die Vorrichtung 201 der Fig. 2.

Die Erfindung umfasst also insbesondere den Gedanken, ein Verfahren, eine Vorrichtung, ein Fahrzeug und ein Computerprogramm bereitzustellen, mittels welchen es jeweils ermöglicht ist, einen autorisierten Online-Zugang (ein Zugriff über ein Kommunikationsnetzwerk) eines Parkplatzmanagementsystems umfassend einen Parkplatzverwaltungsserver auf das Fahrzeug beispielsweise durch den Fahrer oder Eigentümer jederzeit zu unterbrechen. Ein solcher autorisierter Zugang ist nach einer Ausführungsform respektive wird nach einer Ausführungsform auf den Parkplatzverwaltungsserver übergeben oder übertragen.

In einer anderen Ausführungsform ist vorgesehen, dass nach dem Einschränken oder Unterbrechen des Zugriffs der Fahrer oder Eigentümer eine Kontrolle oder eine Steuerung des Fahrzeugs übernimmt. Dies insbesondere dadurch, dass der Teilnehmer des Kommunikationsnetzwerks über das Kommunikationsnetzwerk Steuerungssignale an das Fahrzeug, also insbesondere an die Sicherungseinrichtung, sendet, wie bereits vorstehend erläutert.

In einer anderen Ausführungsform ist vorgesehen, dass alle autorisierten Zugriffe sowie deren Folgen aufgezeichnet, also insbesondere dokumentiert, werden.

Der erfindungsgemäße Gedanke hier ist insbesondere, dass es einen sogenannten "Hauptschlüssel/Hauptaccount" gibt, der die sogenannten "ADMIN-Rechte" besitzt oder aufweist, mit dem dadurch wiederum vergebene Zugänge jederzeit deaktiviert oder eingeschränkt werden können. Das heißt also insbesondere, dass eine übergeordnete Instanz, hier insbesondere ein Administrator-Account, vorgesehen ist, die vergebene Zugänge jederzeit deaktivieren, also unterbinden oder abbrechen oder unterbrechen, oder einschränken kann. "ADMIN" steht als Abkürzung für Administrator. Das heißt, dass der Fahrer oder Eigentümer der Administrator ist und Zugriffe auf sein Fahrzeug einschränken kann. Das heißt, dass die Sicherungseinrichtung insbesondere einen solchen Administratoraccount aufweist, der die Zugriffe auf die Fahrzeugkomponenten oder Fahrzeugsysteme einschränkt und/oder unterbindet und/oder unterbricht und/oder übersteuert. Die Sicherungseinrichtung weist also insbesondere eine ADMIN-Funktionalität auf.

Nach einer Ausführungsform sind folgende Merkmale einzeln oder in beliebiger Kombination vorgesehen:
Fahrzeug wird auf der Droppingzone (Abgabestelle) abgestellt.
- Parkplatzmanagementsystem wird ein Online-Zugriff/Zugang (Freigabe) auf das Fahrzeug übertragen (temporär oder dauerhaft; bei Abgabe oder auch im Vorfeld).
- Fahrer/Eigentümer kann jederzeit den Zugriff/Zugang überwachen/kontrollieren.
   Des Weiteren ist es möglich, dass bei bestimmten Kriterien (z.B. Start des Fahrzeuges vor einer bestimmten Zeit) der Fahrer informiert wird.
- Ist der Fahrer/Eigentümer bezüglich eines Zugriffes nicht einverstanden, dann kann der Fahrer/Eigentümer den autorisierten Zugriff deaktivieren/einschränken.
- Optional kann vorzugsweise der Fahrer eigene Aktionen einleiten, wie z.B. Stopp des Fahrzeuges.
- Des Weiteren werden beispielsweise alle Zugriffe und Aktionen für Beweiszwecke vorzugsweise dokumentiert.

Allgemein kann das Verfahren vorzugsweise auch bei "normalem" Valet Parking (durch menschliches Personal) eingesetzt werden.

Zusätzlich kann es zudem in einer weiteren Ausführungsform möglich sein, das durch der online ADMIN-Methode ein Zugriff mit einem realen physikalischen Schlüssel (wie heute in Fahrzeugen verwendet) ebenfalls übersteuert werden kann.

## Patentansprüche

1. Verfahren zum Betreiben eines Fahrzeugs (301), wobei bei einem fahrzeugexternen Zugriff auf eine oder mehrere Fahrzeugkomponenten der Zugriff mittels einer fahrzeuginternen Sicherungseinrichtung (205) eingeschränkt oder unterbrochen (107) wird, wenn vom Fahrzeug (301) über ein Kommunikationsnetzwerk eine entsprechende Anforderung empfangen wurde, **dadurch gekennzeichnet, dass**, der fahrzeugexterne Zugriff einen Zugriff auf die eine oder die mehreren Fahrzeugkomponenten über das Kommunikationsnetzwerk umfasst, wobei für den Zugriff eine Freigabe für einen Parkplatzverwaltungsserver eingerichtet wird, wobei über das Kommunikationsnetzwerk ein Freigabesignal an den Parkplatzverwaltungsserver gesendet wird, dass der Parkplatzverwaltungsserver entsprechend der Freigabe auf die eine oder die mehreren Fahrzeugkomponenten über das Kommunikationsnetzwerk zugreifen kann.

2. Verfahren nach Anspruch 1, wobei der fahrzeugexterne Zugriff einen Zugriff mittels eines physikalischen Schlüssels auf eine Schlüsselanlage des Fahrzeugs (301) umfasst.

3. Verfahren nach Anspruch 2, wobei die Anforderung einen Übersteuerungsbefehl zum Übersteuern des Zugriffswunschs mittels des physikalischen Schlüssels umfasst.

4. Verfahren nach einem der vorherigen Ansprüche, wobei das Fahrzeug (301) über das Kommunikationsnetzwerk ein Informationssignal an einen Teilnehmer des Kommunikationsnetzwerks sendet, dass der Zugriff auf eine oder mehrere Fahrzeugkomponenten angefordert und/oder bereits durchgeführt wurde und/oder noch durchgeführt wird.

5. Verfahren nach einem der vorherigen Ansprüche, wobei ansprechend auf einen Empfang eines von einem Teilnehmer des Kommunikationsnetzwerks gesendeten Steuerungssignals die Sicherungseinrichtung entsprechend dem Steuerungssignal die eine oder die mehreren Fahrzeugkomponenten steuert.

6. Verfahren nach einem der vorherigen Ansprüche, wobei der Zugriff und vorzugsweise zumindest einige Aktionen, die ansprechend auf den Zugriff durchgeführt werden, aufgezeichnet werden.

7. Vorrichtung (201) zum Betreiben eines Fahrzeugs (301), umfassend eine Kommunikationsschnittstelle (203), die ausgebildet ist, eine Anforderung zum Einschränken oder Unterbrechen eines Zugriffs auf eine oder mehrere Fahrzeugkomponenten über ein Kommunikationsnetzwerk zu empfangen, und eine Sicherungseinrichtung (205), die ausgebildet ist, bei einem Zugriff auf die eine oder die mehreren Fahrzeugkomponenten ansprechend auf den Empfang der Anforderung den Zugriff auf die eine oder die mehreren Fahrzeugkomponenten entsprechend der Anforderung einzuschränken oder zu unterbrechen, **dadurch gekennzeichnet, dass**
die Sicherungseinrichtung (205) ausgebildet ist, eine Freigabe für einen Parkplatzverwaltungsserver einzurichten, wobei die Kommunikationsschnittstelle (203) ausgebildet ist, ein Freigabesignal an den Parkplatzverwaltungsserver über das Kommunikationsnetzwerk zu senden, dass der Parkplatzverwaltungsserver entsprechend der Freigabe auf die eine oder die mehreren Fahrzeugkomponenten über das Kommunikationsnetzwerk zugreifen kann.

8. Fahrzeug (301) umfassend eine Vorrichtung (201) nach Anspruch 7, wobei die Kommunikationsschnittstelle (203) und die Sicherungseinrichtung (205) eingerichtet sind, das Verfahren nach einem der Ansprüche 2 bis 6 durchzuführen.

9. Computerprogramm, umfassend Programmcode zur Durchführung des Verfahrens nach einem der Ansprüche 1 bis 6, wenn das Computerprogramm auf einer Vorrichtung nach Anspruch 7 ausgeführt wird.

## Claims

1. Method for operating a vehicle (301), wherein, in the event of access from outside the vehicle to one or more vehicle components, the access is restricted or interrupted (107) by way of a security apparatus (205) inside the vehicle when a corresponding request has been received by the vehicle (301) via a communication network, **characterized in that** the access from outside the vehicle comprises access to the one or more vehicle components via the communication network, wherein clearance for a parking space management server is set up for the access, wherein a clearance signal is transmitted to the parking space management server via the communication network, **in that** the parking space management server is able to access the one or more vehicle components via the communication network in accordance with the clearance.

2. Method according to Claim 1, wherein the access from outside the vehicle comprises access to a key system of the vehicle (301) by way of a physical key.

3. Method according to Claim 2, wherein the request comprises an override command to override the access request by way of the physical key.

4. Method according to one of the preceding claims, wherein the vehicle (301) transmits an information signal to a subscriber of the communication network via the communication network, wherein the access to one or more vehicle components is requested and/or has already been performed and/or is still being performed.

5. Method according to one of the preceding claims, wherein, in response to reception of a control signal transmitted by a subscriber of the communication network, the security apparatus controls the one or more vehicle components in accordance with the control signal.

6. Method according to one of the preceding claims, wherein the access and preferably at least some actions that are performed in response to the access are recorded.

7. Device (201) for operating a vehicle (301), comprising a communication interface (203) that is designed to receive a request to restrict or interrupt access to one or more vehicle components via a communication network, and a security apparatus (205) that is designed, in the event of access to the one or more vehicle components in response to the reception of the request, to restrict or to interrupt the access to the one or more vehicle components in accordance with the request, **characterized in that** the security apparatus (205) is designed to set up clearance for a parking space management server, wherein the communication interface (203) is designed to transmit a clearance signal to the parking space management server via the communication network, **in that** the parking space management server is able to access the one or more vehicle components via the communication network in accordance with the clearance.

8. Vehicle (301) comprising a device (201) according to Claim 7, wherein the communication interface (203) and the security apparatus (205) are designed to perform the method according to one of Claims 2 to 6.

9. Computer program comprising program code for performing the method according to one of Claims 1 to 6 when the computer program is executed on a device according to Claim 7.

## Revendications

1. Procédé permettant de faire fonctionner un véhicule (301), dans lequel, lors d'un accès externe au véhicule à un ou à plusieurs composants de véhicule, l'accès est limité ou interrompu (107) au moyen d'un dispositif de sécurité interne au véhicule (205) si le véhicule (301) a reçu une demande correspondante par un réseau de communication,
**caractérisé en ce que** l'accès externe au véhicule comprend un accès audit un ou aux plusieurs composants de véhicule par le réseau de communication, une libération pour un serveur de gestion d'aire de stationnement étant configurée pour l'accès, un signal de libération étant envoyé par le réseau de communication au serveur de gestion d'aire de stationnement indiquant que le serveur de gestion d'aire de stationnement peut accéder selon la libération audit un ou aux plusieurs composants de véhicule par le réseau de communication.

2. Procédé selon la revendication 1, dans lequel l'accès externe au véhicule comprend un accès au moyen d'une clé physique à un système de clés du véhicule (301) .

3. Procédé selon la revendication 2, dans lequel la demande comprend un ordre d'annulation servant à annuler le souhait d'accès au moyen de la clé physique.

4. Procédé selon l'une quelconque des revendications précédentes, dans lequel le véhicule (301) envoie par le réseau de communication à un abonné du réseau de communication un signal d'information indiquant que l'accès à un ou à plusieurs composants de véhicule a été demandé et/ou a déjà été effectué et/ou sera effectué ultérieurement.

5. Procédé selon l'une quelconque des revendications précédentes, dans lequel, en réponse à une réception d'un signal de commande envoyé par un abonné du réseau de communication, le dispositif de sécurité commande ledit un ou les plusieurs composants de véhicule selon le signal de commande.

6. Procédé selon l'une quelconque des revendications précédentes, dans lequel l'accès et de préférence au moins certaines actions, qui sont effectuées en réponse à l'accès, sont enregistrés.

7. Dispositif (201) permettant de faire fonctionner un véhicule (301), comprenant une interface de communication (203) qui est réalisée pour recevoir une demande de limiter ou d'interrompre un accès à un ou à plusieurs composants de véhicule par un réseau de communication, et un dispositif de sécurité (205) qui est réalisé, en cas d'accès audit un ou aux plusieurs composants de véhicule, en réponse à la réception de la demande, pour limiter ou interrompre l'accès audit un ou aux plusieurs composants de véhicule selon la demande,
**caractérisé en ce que** le dispositif de sécurité (205) est réalisé pour configurer une libération pour un serveur de gestion d'aire de stationnement, l'interface de communication (203) étant réalisée pour envoyer par le réseau de communication au serveur de gestion d'aire de stationnement un signal de libération indiquant que le serveur de gestion d'aire de stationnement peut accéder audit un ou aux plusieurs composants de véhicule par le réseau de communication selon la libération.

8. Véhicule (301), comprenant un dispositif (201) selon la revendication 7, dans lequel l'interface de communication (203) et le dispositif de sécurité (205) sont configurés pour exécuter le procédé selon l'une quelconque des revendications 2 à 6.

9. Programme informatique, comprenant du code programme pour exécuter le procédé selon l'une quelconque des revendications 1 à 6 lorsque le programme informatique est exécuté sur un dispositif selon la revendication 7.
